# EUROPÄISCHE PATENTSCHRIFT

(11) **EP 1 727 417 B1**
(45) Veröffentlichungstag und Bekanntmachung des Hinweises auf die Patenterteilung: **30.07.2008**
(21) Anmeldenummer: 05744148.7
(22) Anmeldetag: 23.03.2005
(51) Int. Cl.: A01D 46/253

(54) **VORRICHTUNG ZUM ERNTEN VON OBST UND GEMÜSE**
DEVICE FOR HARVESTING FRUIT AND VEGETABLES
DISPOSITIF DE RECOLTE DE FRUITS ET LEGUMES

(30) Priorität: 23.03.2004 DE 102004014225
(43) Veröffentlichungstag der Anmeldung: 06.12.2006
(73) Patentinhaber: DAAS, Talal, Naperwille, IL 60565 (US); Daas, Kamal, 44915 Tira Triengle (IL)
(72) Erfinder: DAAS, Talal, Naperwille, IL 60565 (US); Daas, Kamal, 44915 Tira Triengle (IL)
(74) Vertreter: Herrmann, Uwe
(86) Internationale Anmeldenummer: PCT/IB2005/001636
(87) Internationale Veröffentlichungsnummer: WO 2005/089530

(56) Entgegenhaltungen:
- FR-A- 2 452 864
- US-A- 4 519 193
- US-A- 4 707 918

## Beschreibung

Die vorliegende Erfindung betrifft eine Vorrichtung zum Ernten von Obst, Gemüse und dergleichen.

Nach dem heute üblichen Verfahren wird Obst, Gemüse und dergleichen, beispielsweise Tomaten und Gurken dadurch geerntet, dass die Frucht abgepflückt und vor Ort in einer Kiste oder einem Korb gesammelt wird. Die gesammelten Früchte werden sodann zu einer Umpackstation verbracht, wo sie aus den Sammelgefäßen entnommen, nach Gewicht sortiert und dann in Gewichtsklassen für den Weitertransport wieder verpackt werden. Beispielsweise werden Gurken in sechs Gewichtsklassen eingeteilt, so dass die vom Pflücker angelieferten Früchte in entsprechend sechs Gewichtsklassen aufgeteilt werden und anschließend nach Klassen sortiert verpackt werden müssen.

Aus der US 4,519,193 ist eine Vorrichtung zum Ernten von Früchten bekannt, die diese mittels einer Kamera sucht und die Früchte mittels eines beweglichen Ernte-Schwenkarms von der Pflanze abtrennt. Über Sensoren kann die Größe der geernteten Früchte bestimmt werden.

Das das Sammeln der Früchte, das Entleeren der Sammelgefäße, das Sortieren sowie das Umverpacken der sortierten Früchte umfassende Verfahren ist verhältnismäßig umständlich und erfordert zahlreiche Arbeitsschritte. Der vorliegenden Erfindung liegt daher die Aufgabe zugrunde, eine Vorrichtung bereitzustellen, mittels derer das Verfahren vereinfacht werden kann.

Diese Aufgabe wird durch eine Vorrichtung mit den Merkmalen des Anspruchs 1 gelöst. Danach umfasst die Vorrichtung zum Ernten von Obst, Gemüse und dergleichen Mittel zum Abtrennen der Frucht oder Früchte von der Pflanze, eine Messeinrichtung zur Ermittlung einer Eigenschaft der Frucht oder Früchte sowie Mittel zur Ausgabe eines auf der Ermittlung der Eigenschaft beruhenden Wertes oder Signals und/oder eines auf der Ermittlung der Eigenschaft beruhenden Steuerbefehls, aufgrund dessen die Frucht einem Bestimmungsort zugeführt wird. Bei der erfindungsgemäßen Vorrichtung handelt es sich um eine handgehaltene Vorrichtung. Diese wird vorzugsweise von einer Hand des Bedieners bedient.

Bei der Eigenschaft der Frucht oder der Früchte kann es sich beispielsweise um deren Gewicht handeln. Bei den Mitteln zur Ausgabe eines auf der Erfassung der Eigenschaft beruhenden Wertes oder Signals kann es sich beispielsweise um eine Anzeige für das gemessene Gewicht der Frucht oder eines Strauches von Früchten, beispielsweise Tomaten, oder um die Anzeige einer Gewichtsklasse handeln. Selbstverständlich sind auch andere Parameter der Frucht bzw. Früchte denkbar, wie beispielsweise deren Größe, Farbe, Konsistenz etc.

Die erfindungsgemäße Vorrichtung gibt in einer bevorzugten Ausgestaltung der Erfindung dem Bediener die Möglichkeit, vor Ort eine Eigenschaft der Frucht oder der Früchte zu bestimmen und somit auch vor Ort bereits eine Sortierung der Frucht oder Früchte nach den gemessenen Kriterien, wie beispielsweise Gewicht oder Größe, vornehmen zu können. Daraus ergibt sich der wesentliche Vorteil, dass ein nach dem Stand der Technik erforderliches Auspacken der gesammelten Früchte in einer Umpackstation und deren dortige Sortierung und erneute Verpackung entfallen kann.

Alternativ oder zusätzlich kann vorgesehen sein, dass ein Steuerbefehl ausgegeben wird, der auf der Ermittlung der Eigenschaft der Frucht oder der Früchte beruht, und aufgrund dessen die Frucht einem Bestimmungsort zugeführt wird. Denkbar ist beispielsweise, dass die Frucht oder die Früchte nach ihrer Abtrennung von der Pflanze und nach der Ermittlung des Messwertes mittels einer Vorrichtung über eines von mehren Sammelgefäßen bewegt wird, dem Früchte der ermittelten Klasse, beispielsweise der ermittelten Gewichtsklasse zugeordnet sind. Die Vorrichtung kann als schwenkbarer oder linear verfahrbarer Greifer ausgeführt sein, der z.B. elektrisch bewegt wird und aufgrund des erhaltenen Steuerbefehls die gewünschte Bewegung ausführt, so dass eine automatische Sortierung erfolgt.

Vorteilhafte Ausgestaltungen der Erfindung sind Gegenstand der Unteransprüche.

Bei der Einrichtung zur Erfassung einer Eigenschaft der Frucht oder Früchte kann es sich um eine Wägeeinrichtung zur Erfassung des Gewichtes der Frucht oder Früchte oder um eine Messeinrichtung zur Erfassung der Größe der Frucht oder Früchte handeln. Grundsätzlich ist denkbar, dass nur einzelne Früchte oder gleichzeitig mehrere Früchte, beispielsweise Strauchtomaten, erfasst werden. Die Messeinrichtung zur Ermittlung einer Eigenschaft kann grundsätzlich auch andere Parameter erfassen. Ein Beispiel ist die Farbe der Frucht, über die sich Rückschlüsse darauf ziehen lassen, ob die Frucht reif ist. Die Farbe der Frucht lässt sich mit einer Photozelle erfassen oder kategorisieren. Denkbar ist auch, dass sich die Konsistenz (weich/hart) der Frucht erfassen lässt. Dazu kann beispielsweise mit einem bewegbaren Stift mit Wegaufnehmer gemessen werden, wieweit die Frucht beim Kontakt mit ihrer Oberfläche nachgibt.

In weiterer Ausgestaltung der Erfindung ist vorgesehen, dass die Wägeeinrichtung oder die Messeinrichtung zur Erfassung der Größe mit einer Anzeige in Verbindung steht, in der der gemessene Wert oder eine Kategorie angegeben wird, in die der gemessene Wert fällt. Kommt es auf den genauen Wert nicht an, kann es ausreichend sein, die Kategorie, beispielsweise die Gewichts- oder Größenklasse, anzugeben, in die die Frucht oder Früchte fallen. Eine derartige Anzeige ist selbstverständlich nicht auf die Anzeige von Gewicht oder Größe beschränkt, sondern kann sich auch auf beliebige andere gemessene Parameter oder Parameterkategorien beziehen.

Die Art der Anzeige ist ebenfalls beliebig. Denkbar ist eine optische Anzeige in Form eines Displays oder auch eine akustische Anzeige in Form eines charakteristischen Tones. Auch ist der Ausdruck des gemessenen Parameters oder der Parameterkategorie denkbar. Auch eine herkömmliche analoge Anzeige ist einsetzbar.

In bevorzugter Ausgestaltung der Erfindung handelt es sich um eine elektronische Einrichtung zur Ermittlung einer Eigenschaft und/oder um elektronische Mittel zur Ausgabe eines auf der Erfassung der Eigenschaft beruhenden Wertes oder Signals handelt. Dementsprechend kann die Vorrichtung um eine Elektronik verfügen, die die Erfassung des Messwertes und/oder die Angabe des Wertes oder Signals steuert.

Bei den Mitteln zum Abtrennen der Frucht oder Früchte von der Pflanze kann es sich um ein bewegbares Messer handeln. Grundsätzlich sind auch andere Mittel, wie beispielsweise Scheren und dergleichen denkbar. Sofern möglich, kann auch ein Abreißen der Frucht oder Früchte von der Pflanze in Betracht kommen. Unter Abtrennen der Frucht oder der Früchte ist zu verstehen, dass die Frucht von ihrem Stiel getrennt wird oder auch, dass der Stiel durchtrennt wird.

Die Mittel zum Abtrennen der Frucht oder Früchte von der Pflanze können mechanisch, pneumatisch, hydraulisch oder elektrisch betreibbar sein. Denkbar ist z.B. ein elektrisch oder pneumatisch betriebenes Messer, dass beim Auslösen den Stiel, an dem die Frucht hängt, durchtrennt.

In besonders bevorzugter Ausgestaltung der Erfindung ist eine Greifvorrichtung zum Greifen der Frucht oder Früchte und/oder des Stiels vorgesehen, an dem sich die Frucht oder Früchte befindet. Dabei kann vorgesehen sein, dass das Abtrennen der Frucht oder Früchte von der Pflanze nach dem Greifen erfolgt und dass im Anschluss daran, die Eigenschaft der abgetrennten Frucht oder Früchte ermittelt wird.

Vorteilhaft ist es, wenn die Greifvorrichtung mit der Messeinrichtung zur Erfassung einer Eigenschaft der Frucht oder Früchte in Verbindung steht. Möglich ist es, dass die Greifvorrichtung beispielsweise mit einer Wägeeinrichtung in Verbindung steht, die das Gewicht der abgetrennten und von der Greifvorrichtung gehaltenen Frucht oder Früchte erfasst.

Hinsichtlich des Betriebes der Greifvorrichtung gibt es keinerlei Beschränkungen. Die Greifvorrichtung kann beispielsweise mechanisch, pneumatisch, hydraulisch oder elektrisch betrieben sein. Möglich ist es beispielsweise, zwei oder mehr mechanisch, pneumatisch, hydraulisch oder elektrisch bewegbare Backen vorzusehen, die aufeinander zubewegt werden können, um die Frucht oder Früchte bzw. den Stiel zu fixieren. Auch aufblasbare oder mit einer Flüssigkeit füllbare Greifelemente sind denkbar, bei deren Befüllung der zwischen diesen befindliche Abstand verringert wird und auf diese Weise eine Fixierung erfolgt.

Denkbar ist es, dass die Greifvorrichtung pneumatisch betrieben ist und wenigstens zwei aufblasbare Greifer umfasst. Diese fixieren beispielsweise den Stiel, an dem sich die Frucht oder Früchte befinden oder auch die Frucht oder die Früchte selbst.

Vorzugsweise erfolgt dass Abtrennen der Frucht oder Früchte von der Pflanze nach dem Fixieren in der Greifvorrichtung, da ein Ausweichen der Frucht beim Abtrennen auf diese Weise verhindert werden kann.

Besonders vorteilhaft ist es, wenn die Greifvorrichtung vier Greifer umfasst. Diese sind in vorteilhaft derart einsetzbar, dass zwei gegenüberliegend angeordnete Greifer den Stiel an einer ersten Position fixieren und zwei weitere, ebenfalls gegenüberliegend angeordnete Greifer den Stiel an einer davon beabstandeten zweiten Position des Stiels fixieren. In dieser Position ist der Stiel optimal für dessen Durchtrennung fixiert.

Es kann eine Pumpvorrichtung zum Betrieb der Greifvorrichtung vorgesehen sein. Die Pumpvorrichtung kann manuell betrieben sein und dient dazu, die Greifvorrichtung zu aktivieren. Auch ist es denkbar, mittels derselben Pumpvorrichtung ein Messer zu aktivieren, das mit einer Kolben-Zylinder-Einheit in Verbindung steht und das beim Befüllen des Zylinders mit Druckluft bewegt wird, so dass der Stiel durchtrennt werden kann. Die Messeinrichtung sowie die Mittel zur Ausgabe eines Wertes oder Signals können elektronisch ausgeführt sein und beispielsweise batteriebetrieben sein.

Auch ist es denkbar, die Greifvorrichtung mechanisch und die Einrichtung zur Erfassung einer Eigenschaft und/oder die Mittel zur Ausgabe eines Wertes oder Signals elektronisch auszuführen. Ebenso ist es möglich, sowohl die Greifvorrichtung als auch die Messeinrichtung bzw. die Mittel zur Ausgabe eines Signals oder Wertes elektronisch auszuführen. Beliebige Kombinationen zwischen mechanischen, pneumatischen, hydraulischen und elektrischen Komponenten der Vorrichtung sind denkbar.

Die Einrichtung zur Messung einer Eigenschaft sowie die Mittel zur Ausgabe eines auf der Messung der Eigenschaft beruhenden Wertes oder Signals können vorteilhaft mittels einer Batterie oder einem Akku betrieben werden. Dies kann auch für die Mittel zum Abtrennen der Frucht oder Früchte von der Pflanze und für die Greifvorrichtung gelten.

Weitere Einzelheiten und Vorteile der Erfindung werden anhand eines in der Zeichnung dargestellten Ausführungsbeispiels näher erläutert.

Es zeigen:
- Fig. 1:: eine schematische Ansicht der erfindungsgemäßen Vorrichtung beim Abtrennen einer Gurke und
- Fig. 2.: eine weitere schematische Ansicht der Vorrichtung gemäß Fig. 1.

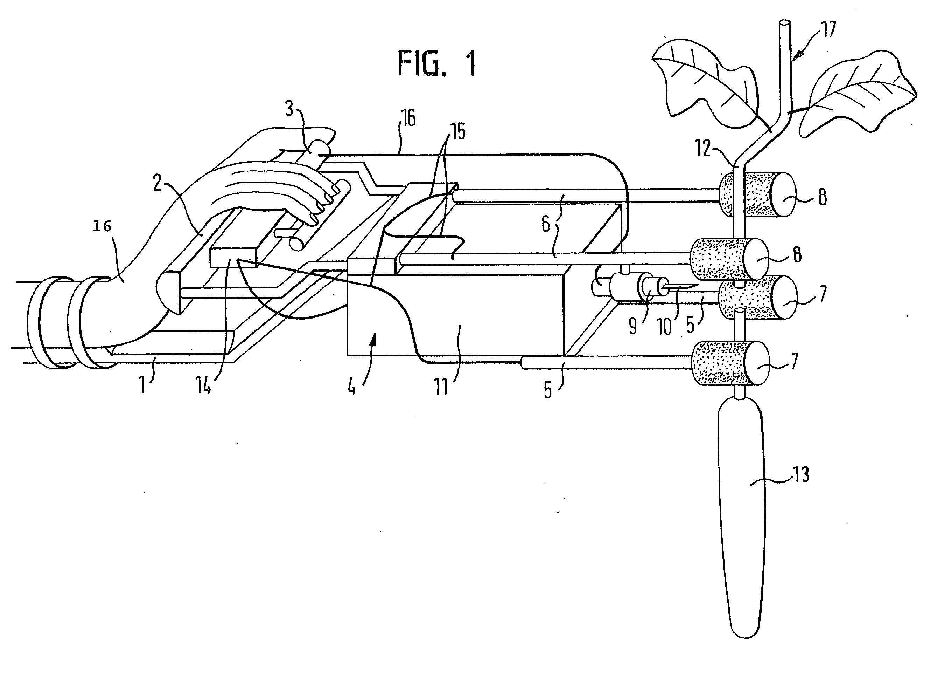

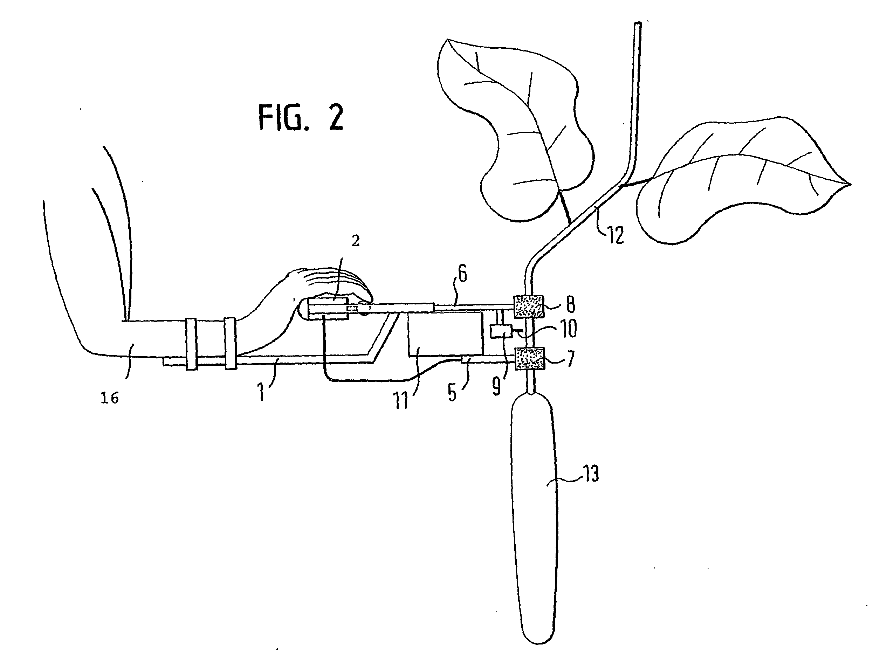

Die Fig. 1 und 2 zeigen eine handgehaltene Vorrichtung zum Ernten von Gurken, Tomaten und dergleichen gemäß der vorliegenden Erfindung. Die Vorrichtung weist den Tragarm 1 auf, der aus einem Bügel besteht, die mit dem Arm 16 des Bedieners in Verbindung steht und dort z.B. mittels eines Klettverschlusses oder einer Schelle fixiert wird.

Des Weiteren ist eine handbetriebene Pumpvorrichtung 14 vorgesehen, die mittels eines Handgriffes betätigt werden kann, der sich im Bereich der Hand des Bedieners befindet. Von der Pumpvorrichtung 14 gehen luftführende Leitungen 15, 16 aus, die mit einer ein Messer 10 aufweisenden Schneidvorrichtung 9 sowie mit aufblasbaren Greifern 7, 8 unmittelbar oder mittelbar in Verbindung stehen. Die Leitungen 15, 16 sind vorzugsweise flexibel.

Das Bezugszeichen 2 kennzeichnet einen Handgriff mit Kolben, der zur Aktivierung der Greifvorrichtung dient.

Wie aus Fig. 1 ersichtlich, sind die Greifer 7, 8 jeweils paarweise vorhanden, wobei die beiden Paare voneinander beabstandet sind, um dazwischen einen Raum zum Schneiden des Stiels 12 der Pflanze 17 freizulassen. Bei der Pflanze 17 handelt es sich beispielsweise um eine Tomaten- oder Gurkenpflanze. Selbstverständlich kann es sich auch um andere Pflanzen bzw. zu erntende Früchte handeln.

Jeder der Greifer 7, 8 befindet sich an einem Schaft 5, 6, wobei die unteren Greifer 7 jeweils an einem unten liegenden Schaft 5 und die oberen Greifer 8 jeweils an einem oben liegenden Schaft 6 befestigt sind. In dem jeweiligen Schaft 5, 6 erstrecken sich die Leitungen 15, 16 bis zu den Greifern 7, 8, mit denen diese luftdicht in Verbindung stehen. Alternativ dazu ist denkbar, dass die Leitungen 15, 16 an dem jeweiligen Schaft 5, 6 enden und die Luft sodann durch den Schaft 5, 6 zu den Greifern 7, 8 geführt wird.

Wie aus Fig. 1 ersichtlich, zweigt die luftführende Leitung zur Versorgung der oberen Greifer 8 von der luftführenden Leitung zur Versorgung der unteren Greifer 7 ab.

Jeder Schaft 5, 6 steht mit einem Gehäuse 4 in Verbindung, in dem sich die batteriebetriebene Wägeeinrichtung, Elektronik zur Signalverarbeitung und Anzeige für das Gewicht oder die Gewichtsklasse befinden. Zusammenfasst sind die Elektronikkomponenten mit dem Bezugszeichen 11 gekennzeichnet. Bei der Anzeige kann es sich um LEDs oder eine digitale Anzeige handeln.

Wie dies aus den Figuren weiter hervorgeht, erstreckt sich von einem Schaft 6 die Schneidvorrichtung 9, die an ihrer zu dem Stiel 12 gerichteten Seite ein vorzugsweise auswechselbares Messer 10 trägt. Die Schneidvorrichtung 9 weist eine Kolben-Zylinder-Einheit auf, deren Zylinder über eine luftführende Leitung mit der Pumpvorrichtung 14 mittelbar in Verbindung steht.

Über den Auslöser 3 wird der Zylinderraum mit Druckluft beaufschlagt, woraufhin das Messer 10 auf den Stiel 12 zubewegt und diesen durchtrennt. Fig. 1 zeigt den durchtrennten Stiel 12 mit Gurke 13.

Wie aus Fig. 1 ersichtlich hängt die Gurke 13 nach der Durchtrennung des Stiels 12 an den unteren Greifern 7, die jeweils an einem unteren Schaft angeordnet sind. Wenigstens ein unterer Schaft 5 oder beide untere Schäfte 5 stehen mit der Wägeeinrichtung in Verbindung, so dass das Gewicht der abgeschnittenen Frucht 13 sowie des unterhalb der Schnittstelle befindlichen Stiels erfasst werden kann.

Die Funktion der erfindungsgemäßen Vorrichtung gestaltet sich wie folgt:

Die Vorrichtung wird so positioniert, dass sich der Stiel 12 zwischen den jeweils paarweise angeordneten Greifern 7, 8 befindet. Mittels der Pumpvorrichtung 14 wird über die Leitungen 15, 16 Luft in die Greifer 7, 8 befördert, wodurch diese ihr Volumen vergrößern und den Stiel 12 zwischen sich fixieren. Die Greifer 7 fixieren einen ersten Abschnitt des Stiels 12 und die Greifer 8 fixieren einen zweiten Abschnitt des Stiels 12.

Durch die Betätigung der Pumpeinrichtung 14 wird des Weiteren ein Reservoir mit Druckluft gefüllt, das über die Leitung 16 mit der Schneidvorrichtung 9 in Verbindung steht. Bei Betätigen des Auslösers 3 wird die Druckluft aus dem Reservoir in die Kolben-Zylinder-Einheit der Schneidvorrichtung 9 eingeleitet, wodurch das mit dem Kolben der Einheit in Verbindung stehende Messer 10 auf den sich zwischen den Greifern 7 und 8 befindlichen Abschnitt des Stiels 12 zu bewegt wird und diesen durchtrennt.

Die Frucht - im Ausführungsbeispiel die Gurke 13 - hängt nun mittels des daran befindlichen Stielabschnittes an den Greifern 7, die jeweils über den Schaft 5 mit der Wägeeinheit in Verbindung stehen. Es kann vorgesehen sein, dass ein oder beide Schäfte 5 mit der Wägeeinheit in Verbindung stehen.

Das Gewicht der abgetrennten Gurke 13 kann nun dem Bediener mittels einer Anzeigeeinheit angezeigt werden. Denkbar ist eine digitale Anzeige. Alternativ ist denkbar, dass das Gewicht der Gurke 13 einer Gewichtsklasse zugeordnet wird und in der Anzeige nur die Zugehörigkeit zu einer bestimmten Gewichtsklasse angezeigt wird. Alternativ oder zusätzlich ist denkbar, dass die abtrennte Frucht 13 mittels der Greifer, die in diesem Fall bewegbar auszuführen sind, über das Sammelgefäß oder an die Stelle bewegt werden, an die Früchte der ermittelten Kategorie gesammelt werden.

Nach der Gewichtsbestimmung kann die Luft abgelassen werden, wodurch die Frucht aus den Greifern freigegeben wird und die Vorrichtung für einen weiteren Erntevorgang zur Verfügung steht.

Außer dem beschriebenen Ablauf ist es ebenso denkbar, durch die Pumpeinrichtung 14 zunächst ein Reservoir mit Druckluft zu befüllen und bei Betätigung des Auslösers 3 ein plötzliches Aufblasen der Greifer 7, 8 und im Anschluss daran eine Aktivierung der Schneidvorrichtung 9 zu bewirken.

Außer einer Ausführung mit aufblasbaren Greifelementen 7, 8 ist es ebenso denkbar, dass die Greifvorrichtung aus zusammenführbaren, beispielsweise schwenkbaren Greifarmen besteht, die in ihrem zusammengeführten Zustand den Stiel der Pflanze zwischen sich fixieren. Eine derartige Greifvorrichtung kann ebenfalls z.B. pneumatisch betrieben werden.

Das in der Zeichnung dargestellte Ausführungsbeispiel der Erfindung arbeitet mit einer Batterie zur Versorgung der elektronischen Komponenten sowie mit einer manuell zu betreibenden Pumpeinrichtung 14.

Abweichend davon ist es möglich, die Mittel zum Abtrennen der Frucht oder Früchte von der Pflanze mechanisch und handbetätigt auszuführen. Entsprechendes gilt für die Greifvorrichtung.

Die Messeinheit sowie die zugehörigen elektronischen Bauelemente können durch eine Batterie oder einen Akku mit Strom versorgt werden.

Des Weiteren ist eine Ausführung denkbar, bei der die Mittel zum Abtrennen der Frucht oder Früchte von der Pflanze elektrisch betrieben sind. Entsprechendes kann für die Greifvorrichtung gelten. Denkbar ist beispielsweise eine vollautomatische Ausführung mit einem elektrischen Schalter, bei dessen Betätigung der Stiel vorzugsweise nach einer ebenfalls automatischen Fixierung automatisch durchtrennt wird und anschließend der Messvorgang, beispielsweise die Gewichtsbestimmung durchgeführt wird.

Gegenüber der herkömmlichen Lösung weist die vorliegende Erfindung den Vorteil auf, dass weniger Arbeitsschritte erforderlich sind und Räumlichkeiten zum Umpacken der gesammelten Früchte nicht erforderlich sind. Darüber hinaus ist als Vorteil zu nennen, dass die erfindungsgemäße Vorrichtung preisgünstig ist.

## Patentansprüche

1. Vorrichtung zum Ernten von Obst, Gemüse und dergleichen mit Mitteln zum Abtrennen der Frucht (13) oder Früchte von der Pflanze (17), mit einer Messeinrichtung zur Ermittlung einer Eigenschaft der Frucht (13) oder Früchte sowie mit Mitteln zur Ausgabe eines auf der Ermittlung der Eigenschaft beruhenden Wertes oder Signals und/oder eines auf der Ermittlung der Eigenschaft beruhenden Steuerbefehls, aufgrund dessen die Frucht oder die Früchte einem Bestimmungsort zugeführt wird,
**dadurch gekennzeichnet,**
**dass** es sich um eine handgehaltene Vorrichtung handelt..

2. Vorrichtung nach Anspruch 1, **dadurch gekennzeichnet, dass** es sich bei der Messeinrichtung zur Ermittlung einer Eigenschaft der Frucht (13) oder Früchte um eine Wägeeinrichtung zur Erfassung des Gewichtes der Frucht (13) oder Früchte oder um eine Messeinrichtung zur Erfassung der Größe der Frucht (13) oder Früchte handelt.

3. Vorrichtung nach Anspruch 2, **dadurch gekennzeichnet, dass** die Wägeeinrichtung oder die Messeinrichtung zur Ermittlung der Größe der Frucht (13) oder Früchte mit einer Anzeige in Verbindung steht, in der der gemessene Wert oder eine Kategorie angegeben wird, in die der gemessene Wert fällt.

4. Vorrichtung nach einem der vorhergehenden Ansprüche, **dadurch gekennzeichnet, dass** es sich um eine elektronische Messeinrichtung zur Ermittlung einer Eigenschaft und/oder um elektronische Mittel zur Ausgabe eines auf der Ermittlung der Eigenschaft beruhenden Wertes oder Signals handelt.

5. Vorrichtung nach einem der vorhergehenden Ansprüche, **dadurch gekennzeichnet, dass** es sich bei den Mitteln (9) zum Abtrennen der Frucht (13) oder Früchte von der Pflanze (17) um ein bewegbares Messer (10) handelt.

6. Vorrichtung nach einem der vorhergehenden Ansprüche, **dadurch gekennzeichnet, dass** die Mittel (9) zum Abtrennen der Frucht (13) oder Früchte von der Pflanze mechanisch, pneumatisch, hydraulisch oder elektrisch betreibbar sind.

7. Vorrichtung nach einem der vorhergehenden Ansprüche, **dadurch gekennzeichnet, dass** eine Greifvorrichtung zum Greifen der Frucht (13) oder Früchte und/oder des Stiels (12) vorgesehen ist, an dem sich die Frucht (13) oder Früchte befindet.

8. Vorrichtung nach Anspruch 7, **dadurch gekennzeichnet, dass** die Greifvorrichtung mechanisch, pneumatisch, hydraulisch oder elektrisch betreibbar ist.

9. Vorrichtung nach Anspruch 8, **dadurch gekennzeichnet, dass** die Greifvorrichtung pneumatisch betrieben ist und wenigstens zwei aufblasbare Greifer (7, 8) umfasst.

10. Vorrichtung nach einem der Ansprüche 7 bis 9, **dadurch gekennzeichnet, dass** die Greifvorrichtung vier Greifer (7, 8) umfasst.

11. Vorrichtung nach einem der Ansprüche 8 bis 10, **dadurch gekennzeichnet, dass** eine Pumpvorrichtung (14) zum Betrieb der Greifvorrichtung vorgesehen ist.

## Claims

1. A device for the harvesting of fruit, vegetables and the like having means for separating the piece or pieces of fruit (13) from the plant (17), having a measurement device for the determination of a characteristic of the piece or pieces of fruit (13) as well as having means for the outputting of a value or signal based on the determination of the characteristic and/or the outputting of a control command based on the determination of the characteristic based on which the piece or pieces of fruit are supplied to a destination,
**characterised in that**
the device is a hand-held device.

2. A device in accordance with claim 1, **characterised in that** the measurement device for the determination of a characteristic of the piece or pieces of fruit (13) is a weighing device for the detection of the weight of the piece or pieces of fruit (13) or a weighing device for the detection of the size of the piece or pieces of fruit (18).

3. A device in accordance with claim 2, **characterised in that** the weighing device or the measurement device for the determination of the size of the piece or pieces of fruit (13) is connected to a display in which the measured value or a category is indicated into which the measured value falls.

4. A device in accordance with one of the preceding claims, **characterised in that** it is an electronic measurement device for the determination of a characteristic and/or electronic means for the outputting of a value or signal based on the determination of the characteristic.

5. A device in accordance with one of the preceding claims, **characterised in that** the means (9) for separating the piece or pieces of fruit (13) from the plant (17) is a movable blade (10).

6. A device in accordance with one of the preceding claims, **characterised in that** the means (9) for separating the piece of pieces of fruit (13) from the plant can be driven mechanically, pneumatically, hydraulically or electrically.

7. A device in accordance with one of the preceding claims, **characterised in that** a gripping device is provided for the gripping of the piece or pieces of fruit (13) and/or of the stalk (12) at which the piece or pieces of fruit (13) is/are located.

8. A device in accordance with claim 7, **characterised in that** the gripping device can be operated mechanically, pneumatically, hydraulically or electrically.

9. A device in accordance with claim 8, **characterised in that** the gripping device can be operated pneumatically and includes at least two inflatable grippers (7, 8).

10. A device in accordance with one of the claims 7 to 9, **characterised in that** the gripping device includes four grippers (7, 8).

11. A device in accordance with one of the claims 8 to 10, **characterised in that** a pumping device (14) is provided for the operation of the gripping device.

## Revendications

1. Dispositif pour la récolte de fruits, de légumes et similaires avec des moyens pour détacher le fruit (13) ou les fruits de la plante (17), avec un dispositif de mesure pour déterminer une caractéristique du fruit (13) ou des fruits et avec des moyens pour la sortie d'une valeur ou d'un signal basé sur la détermination de la propriété et/ou d'un ordre de commande basé sur la détermination de la propriété, sur la base duquel le fruit ou les fruits sont amenés à un lieu de destination,
**caractérisé en ce qu'**il s'agit d'un dispositif manuel.

2. Dispositif selon la revendication 1, **caractérisé en ce que** le dispositif pour déterminer une propriété du fruit (13) ou des fruits est un dispositif de pesage pour déterminer le poids du fruit (13) ou des fruits ou un dispositif de mesure pour déterminer la taille du fruit (13) ou des fruits.

3. Dispositif selon la revendication 2, **caractérisé en ce que** le dispositif de pesage ou le dispositif de mesure pour déterminer la taille du fruit (13) ou des fruits communique avec un afficheur sur lequel la valeur mesurée ou une catégorie dans laquelle entre la valeur mesurée est affichée.

4. Dispositif selon l'une des revendications précédentes, **caractérisé en ce qu'**il s'agit d'un dispositif de mesure électronique pour déterminer la caractéristique et/ou de moyens électroniques pour sortir une valeur ou un signal basé sur la détermination de la caractéristique.

5. Dispositif selon l'une des revendications précédentes, **caractérisé en ce que** les moyens (9) pour détacher le fruit (13) ou les fruits de la plante (17) sont un couteau mobile (10).

6. Dispositif selon l'une des revendications précédentes, **caractérisé en ce que** les moyens (9) pour détacher le fruit (13) ou les fruits de la plante peuvent être actionnés de façon mécanique, pneumatique, hydraulique ou électrique.

7. Dispositif selon l'une des revendications précédentes, **caractérisé en ce qu'**il est prévu un dispositif de préhension pour saisir le fruit (13) ou les fruits et/ou la tige (12) sur laquelle se trouvent le fruit (13) ou les fruits.

8. Dispositif selon la revendication 7, **caractérisé en ce que** le dispositif de préhension peut être actionné de façon mécanique, pneumatique, hydraulique ou électrique.

9. Dispositif selon la revendication 8, **caractérisé en ce que** le dispositif de préhension est à actionnement pneumatique et comprend au moins deux organes de préhension (7, 8) pouvant être gonflés.

10. Dispositif selon l'une des revendications 7 à 9, **caractérisé en ce que** le dispositif de préhension comprend quatre organes de préhension (7, 8).

11. Dispositif selon l'une des revendications 8 à 10, **caractérisé en ce qu'**un dispositif de pompage (14) est prévu pour faire fonctionner le dispositif de préhension.
